Europäisches Patentamt

**European Patent Office**

Office européen des brevets

(19)

(11) Veröffentlichungsnummer: **0 061 652**

**A1**

(12) ## EUROPÄISCHE PATENTANMELDUNG

(21) Anmeldenummer: **82102150.8**

(22) Anmeldetag: **17.03.82**

(51) Int. Cl.³: **H 01 R 13/66**
**H 02 H 9/06**

(30) Priorität: **20.03.81 DE 3111080**

(43) Veröffentlichungstag der Anmeldung:
**06.10.82 Patentblatt 82/40**

(84) Benannte Vertragsstaaten:
**IT**

(71) Anmelder: **Heinrich Kopp GmbH & Co. KG**
**Alzenauer Strasse 68-70 (Postfach 60)**
**D-8756 Kahl/Main(DE)**

(72) Erfinder: **Arnhold, Hans**
**Mittelstrasse 1**
**D-8752 Kälberau(DE)**

(72) Erfinder: **Flohr, Peter**
**Tulpenweg 7**
**D-8755 Alzenau-Wasserlos(DE)**

(72) Erfinder: **Noe, Klaus-Peter**
**Welzheimerstrasse 27**
**D-8757 Karlstein 1(DE)**

(74) Vertreter: **Beckmann, Gerhard**
**Röntgenweg 1**
**D-5880 Lüdenscheid/Westf.(DE)**

(54) **Überspannungsschutzvorrichtung für elektrische Hausinstallationsanlagen.**

(57) Zum Schutz der an die Hausinstallation anschließbaren Elektrogeräte und deren Benutzer gegen gefährliche Überspannungen infolge von Belastungsänderungen im Netz und durch atmosphärische Entladungen (Blitzschlag) werden in das Gehäuse (2) der Steckverbindungsstücke in Form von Zwischensteckern oder Adaptern u.dgl. zwischen den geräteseitigen Steckkontaktbauchsen (1) in Parallelschaltung ein gasgefüllter Ableiter (3) und ein Zinkoxyd-Varistor (4) zur Überbrückung der Anschlußkontakte oder von diesen gegen den geerdeten Schutzleiter eingesetzt, und diese Schutzkombination (3, 4) einerseits direkt sowie andererseits über eine Schmelzsicherung (6) mit den netzeitigen Steckerstiften (5) verbunden, um durch den Abbau der Überspannungen einen Funkenüberschlag im Leitungsnetz und demzufolge die Auslösung des Fehlerstromschutzschalters der Anlage zu verhindern.

./...

- 1 -

<u>Überspannungsschutzvorrichtung für</u>
<u>elektrische Hausinstallationsanlagen</u>

Die Erfindung bezieht sich auf eine gesonderte Vorrichtung, um elektrische Anlagen und speziell die darin angeschlossenen Geräte sowie deren Benutzer vor einer Gefährdung durch kurzzeitig im Leitungsnetz auftretende Überspannungen zu schützen.

Von den energieschwächeren Spannungsspitzen bei Ausgleichvorgängen durch plötzliche Belastungsveränderungen abgesehen, treten derartige Überspannungen in wesentlich energiereicherer Form durch atmosphärische Entladungen aufgrund von Resonanzerscheinungen in den als Schwingkreise wirkenden Leitersystemen auf. Hier pflanzt sich die bei Blitzschlag in die Freileitung entstehende Stoß- bzw. Wanderwelle trotz geeigneter Schutzmaßnahmen in den Schalt- und Umspann- stationen unter Umständen längs der Leitungen bis in die Hausinstallation fort und kann dortselbst Isolierungen durchschlagen und zerstören und damit beträchtlichen Schaden anrichten.

Um dem zu begegnen, hat man bereits - wie zum Schutz von Fernmeldeleitungen und -geräten - auch für die Wechselstromnetze mit höherer Betriebsspannung Ableiter entwickelt, durch welche die Überspannungen im Bereich der Hausinstallation auf ein ungefährliches Maß herabgesetzt werden können.

- 2 -                    0061652

Anstelle von Dämpfungswiderständen in Reihe mit Löschfunkenstrecken hat sich hierfür inzwischen eine Anordnung bewährt
und durchgesetzt, die aus der Parallelschaltung einer als
Ableiter wirkenden Gasentladungsstrecke und eines Varistors
mit stromabhängiger Widerstandscharakteristik besteht und
als solche zwischen den zu schützenden Leitungen und einer
Erdungsleitung angeschlossen ist. Durch diese Anordnung
können zunächst die wesentlich häufiger auftretenden energieschwachen Überspannungsspitzen soweit verringert werden,
daß die Zündspannung des Ableiters garnicht erst erreicht
wird. Bei den energiereichen Überspannungen aufgrund atmosphärischer Entladungen steigt dagegen der Ableitstrom durch
den Varistor und damit auch der Spannungsabfall über der
Schutzkombination. Demzufolge wird der Ableiter gezündet
und schützt jetzt seinerseits den Varistor und die angeschlossenen Einrichtungen. Dabei fällt gegebenenfalls die
der Schutzvorrichtung bzw. den Verbraucherstromkreisen der
Hausinstallationsanlage vorgeschaltete Hauptsicherung aus
und muß erneuert werden.

Abgesehen von dem relativ selten erfolgenden Ausfall der
trägen Hausanschlußsicherungen besitzen die von Seiten des
Freileitungsnetzes über das Kabelnetz noch bis in die Hausinstallation gelangenden Überspannungen die unangenehme
Eigenschaft, an irgendeiner Stelle des Verbrauchernetzes,
so z.B. in Abzweigdosen, zwischen den zufälligerweise allzu
nahe beieinander gelegenen blanken Drahtenden von Phasen-
und Schutzleitern einen Funkenüberschlag zu verursachen.
Ein derartiger Überschlag wäre an sich ohne Bedeutung, er
entspricht aber hinsichtlich seiner inneren Wirkung dem
Fließen eines Fehlerstroms, wodurch der empfindliche Fehlerstromschutzschalter der Anlage auslöst, ohne daß darüber
hinaus etwas anderes zu passieren braucht. Wenn dann jedoch
dieser Schutzschalter etwa wegen längerer Abwesenheit der
Hausbewohner nicht wieder eingeschaltet wird, kann z.B.
durch den Ausfall der Gefrier-, Pumpen- oder Heizungsanlagen u.dgl. beträchtlicher Schaden entstehen.

Unter diesen Gesichtspunkten liegt der Erfindung die Aufgabe zugrunde, für Hausinstallationsanlagen anstelle der, wenn überhaupt, im Hausanschlußkasten nach den Hauptsicherungen fest in die stationären Klemmanschlußblöcke eingebauten Überspannungsschutzvorrichtung eine weniger aufwendige und praktikablere Möglichkeit zu schaffen, um die Stromkreise der vorhandenen Anlage nachträglich auf einfache Weise wirksam gegen die Gefährdung durch Überspannungen abzusichern.

Zur Lösung dieser Aufgabe bildet die Erfindung eine derartige Überspannungsschutzvorrichtung gemäß dem verwendeten Stecksystem in Form eines Zwischensteckers oder Adapters und nach dem Oberbegriff des Patentanspruchs 1 dahingehend aus, daß die in dem Gehäuse eines solchen Steckverbindungsstücks angeordneten Schaltglieder der Schutzkombination aus einem gasgefüllten Ableiter und einem Zinkoxyd-Varistor unmittelbar mit den (geräteseitigen) Steckkontaktbuchsen verbunden sind und mit den (netzseitigen) Steckerstiften einerseits direkt sowie andererseits über ein in die jeweilige Gehäuseform einbezogenes Schmelzsicherungselement in leitender Verbindung stehen. Für den Steckanschluß einphasiger Elektrogeräte mit Schutzleiter wird die Schutzkombination jeweils von dem Phasenleiter und dem Nulleiter gegen den geerdeten Schutzleiter geschaltet.

In einer derartigen Ausbildung begrenzt die einfach zwischen Netzanschluß und Verbraucher eingesteckte Vorrichtung infolge ihres großen Ableitvermögens extrem schnell ansprechend sowohl die energieschwachen Spannungsspitzen als auch die energiereichen Überspannungen durch atmosphärische Entladungen. Hinzu bewirkt die der Schutzkombination netzanschlußseitig vorgeschaltete Schmelzsicherung gegebenenfalls eine Abschaltung der Netzspannung, wenn der Ableiter gezündet hat. Durch diese Maßnahme wird verhindert, daß nach dem

- 4 -                    0061652

Abklingen der Überspannung unter Einfluß der weiter anliegenden Netzspannung und entsprechend der Netzimpedanz am jeweiligen Einsatzort noch ein sog. Folgestrom durch den Ableiter fließen kann und dessen sicheres Löschen verwehrt.

In zweckmäßiger Ausgestaltung der Erfindung setzt sich das in Längsrichtung geteilte Gehäuse der Überspannungsschutzvorrichtung aus zwei gleichförmigen Kunststoff-Hohlschalen zusammen, die in ihrem Inneren zur mechanischen Verbindung miteinander quer von den ihnen angeformten Teilen der von außen her zugänglichen Halterung für das Schmelzsicherungselement durchgriffen werden. Diese Ausgestaltung erlaubt es einerseits, die beiden Halbschalen des Isolierstoffgehäuses auf geeignete Weise gebrauchsfertig miteinander zu koppeln; andererseits ergibt sich hierdurch die Möglichkeit, die zusammen mit den anderen Schaltgliedern innerhalb des Gehäuses untergebrachte Schmelzsicherung im Defektfall von außen her auswechseln zu können.

Mit entsprechendem Aufwand ist es natürlich auch möglich, den Ableiter und den Varistor einsatzbedingt in ihrer Ansprech-Charakteristik genau aufeinander abzustimmen, um dadurch allein den notwendigen Schutz zu erreichen. Wenn man dann diese spezifizierte Schutzkombination zwischen die unmittelbar (und mechanisch) miteinander verbundenen Steckerstifte und Steckkontaktbuchsen einsetzt, bietet sich als Weiterbildung an, den beiden Hohlschalen des Gehäuses an ihrer Innenwandung statt der Sicherungshalterung lediglich einen durchbohrten Ansatzzapfen für den Durchgriff eines Befestigungsniets anzuformen.

Nach diesen Erfindungsgedanken sind die Überspannungsschutzvorrichtungen in jedem Anwendungsfall für sich selbständige Elemente, die sich einfach und ohne Abänderung bzw. Ergänzung der bereits vorhandenen Einrichtungen einer Hausinstallationsanlage gegen die entsprechenden Elemente in ungeschützter

- 5 -

0061652

Ausführung, wie u.a. normale Schutzkontakt-Zwischenstecker oder Mehrfach-Adapter u.dgl., austauschen lassen. Dabei wird durch den Einsatz der erfindungsgemäßen Schutzelemente in vorteilhafter Weise erreicht, daß sich die von anderer Stelle durch Belastungsänderungen oder atmosphärische Entladungen von außen her in das Verbraucherstromnetz gelangenden gefährlichen Überspannungen innerhalb dieser Schutzelemente zwischen den betreffenden Leitungsadern ausgleichen und abbauen. Infolge dessen kann es auch in der näheren Umgebung der Einsatzstelle dieser Schutzelemente an den gefährdeten Stellen nicht mehr zu Funkenüberschlägen und einer unbeabsichtigten Auslösung der Berührungsschutzorgane einer Anlage kommen. Darüber hinaus gewährleistet die erfindungsgemäße Vorrichtung auch unter extremen Belastungen genügende Eigensicherheit durch die eingebaute Schmelzsicherung, um den gezündeten Überspannungsableiter nicht durch den Netzfolgestrom weiterbrennen zu lassen.

In der anliegenden Zeichnung ist als typisches Ausführungsbeispiel ein mit der erfindungsgemäßen Überspannungsschutzvorrichtung ausgerüstetes Mehrfach-Steckverbindungsstück zum Einsetzen von zwei 2-poligen Flachsteckern in eine Schutzkontaktsteckdose dargestellt.

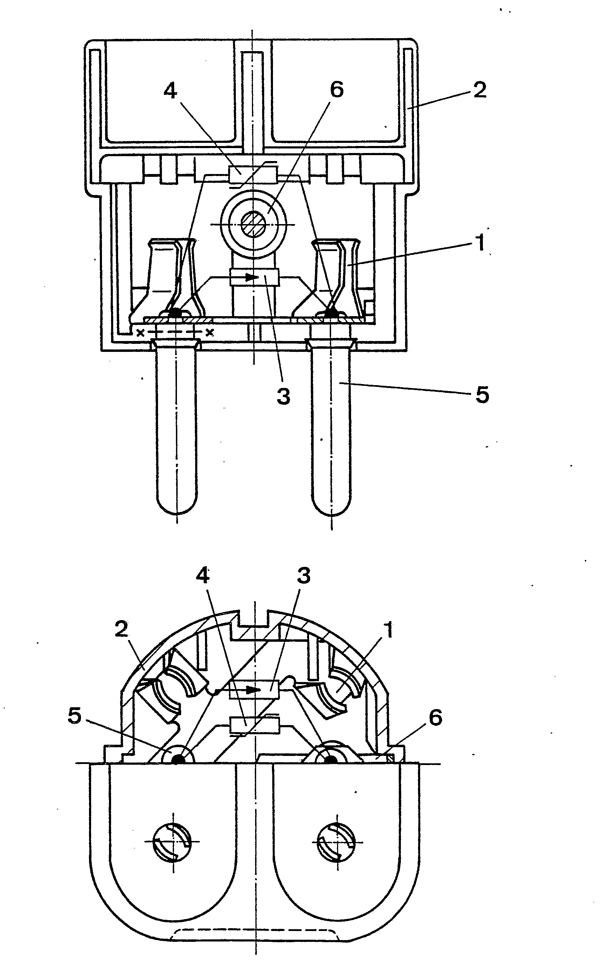

Wie aus dem Längsschnitt durch dieses Steckverbindungsstück und darunter aus der jeweils zur Hälfte in der Draufsicht und im Querschnitt dargestellten Ansicht zu entnehmen ist, werden die beiden Steckbuchsenpaare 1 im Inneren des Isolierstoffgehäuses 2 an ihren Anschlußstellen von dem Überspannungsableiter 3 und dem Zinkoxyd-Varistor 4 in Parallelschaltung überbrückt. Dabei ist eine dieser Anschlußstellen unmittelbar mit dem einen der Steckerstifte 5 verbunden, z.B. vernietet, während die elektrische Verbindung von dem anderen Steckbuchsenpaar 1, wie in der Zeichnung lediglich mit der Trennungslinie "x" angedeutet, über die quer im Gehäuse 2 mittig zwischen den vier Steckkontaktbuchsen 1 angeordnete

0061652

und von außen her, beispielsweise über einen Schraub- oder Bajonettverschluß, auswechselbare Schmelzsicherung 6 zu dem anderen Steckerstift 5 verläuft. Für eine solche Anordnung steht hier, wie bei allen gebräuchlichen Betriebsmitteln dieser Art, im Gehäuseinneren stets genügend Leerraum zur Verfügung, um die beiden an sich kleinen Schaltglieder 3, 4 mitsamt der Feinsicherung 6 und sogar einer dafür vorgesehenen Halterung auf sichere Weise unterzubringen und mit den infrage kommenden Anschlußstellen zu verdrahten.

Auf gleiche Weise läßt sich, wie hier das Mehrfach-Steckverbindungsstück, praktisch jedes dafür in Betracht kommende Betriebsmittel gemäß der Erfindung nachträglich bzw. ergänzend mit der abgesicherten Schutzkombination ausrüsten und dadurch mit geringem Aufwand der Netzeingang empfindlicher Geräte unter Einbeziehung des Leitungsnetzes im Nahbereich vor Überspannungen schützen, wie sie mitunter durch Belastungsänderungen im Netz und bei atmosphärischen Entladungen auftreten.

- 7 -                                        0061652

<u>Patentansprüche</u>

1. Überspannungsschutzvorrichtung für elektrische Hausinstallationsanlagen in Form eines Zwischensteckers für
gleichartige oder eines Adapters für unterschiedliche
Stecksysteme, unter Verwendung der Parallelschaltung
eines gasgefüllten Ableiters und eines Zinkoxyd-Varistors
zwischen den zu schützenden Leitungsanschlüssen, dadurch
gekennzeichnet, daß die in dem Gehäuse (2) eines Steckverbindungsstücks angeordneten Schaltglieder (3, 4) der
Schutzkombination unmittelbar mit den (geräteseitigen)
Steckkontaktbuchsen (1) verbunden sind und mit den
(netzseitigen) Steckerstiften (5) einerseits direkt
sowie andererseits über ein in die jeweilige Gehäuseform
einbezogenes Schmelzsicherungselement (6) in leitender
Verbindung stehen.

2. Überspannungsschutzvorrichtung nach Anspruch 1, dadurch
gekennzeichnet, daß die Schutzkombination (3, 4) für
einphasig betriebene Elektrogeräte mit Schutzleiter
jeweils von dem (abgesicherten) Polkontakt des Phasenleiters und von dem des Nulleiters gegen den Polkontakt
des geerdeten Schutzleiters geschaltet ist.

3. Überspannungsschutzvorrichtung nach den Ansprüchen 1
und 2, dadurch gekennzeichnet, daß sich das in Längsrichtung geteilte Gehäuse (2) aus zwei gleichförmigen
Kunststoff-Hohlschalen zusammensetzt, die in ihrem
Inneren zur mechanischen Verbindung miteinander quer
von den ihnen angeformten Teilen der von außen her
zugänglichen Halterung für die Feinsicherung (6) durchgriffen werden.

4. Überspannungsschutzvorrichtung nach den Ansprüchen 1
bis 3, dadurch gekennzeichnet, daß den beiden Hohlschalen des Gehäuses (2) an ihrer Innenwandung anstelle

0061652

der Feinsicherungs-Halterung (6) ein durchbohrter Ansatzzapfen für den Durchgriff eines Befestigungsniets angeformt ist.

0061652

1/1

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-3 830 781 (BROWN)<br>* Spalte 3, Zeile 20 - Spalte 6, Zeile 8; Figuren 1-8 * | 1 | H 01 R 13/66<br>H 02 H 9/06 |
| A | US-A-4 089 032 (DELL ORFANO)<br>* Spalte 2, Zeile 6 - Spalte 3, Zeile 43; Figuren 1-4 * | 1,2 | |
| A | FR-A-2 456 415 (SOULE)<br>* Seite 2, Zeile 14 - Seite 3, Zeile 36; Figuren 1-3 * | 1,2 | |
| A | US-A-4 191 985 (PHILLIPS)<br>* Spalte 3, Zeile 21 - Spalte 7, Zeile 43; figuren 1-9 * | 1 | |
| A | US-A-4 071 872 (PHILLIPS)<br>* Spalte 2, Zeile 47 - Spalte 5, Zeile 38; Figuren 1-7 * | 1 | RECHERCHIERTE SACHGEBIETE (Int. Cl. ³) |
| A | DE-A-2 355 421 (SIEMENS)<br>* Seite 3, Absatz 2 - Seite 5; Figuren * | 1 | H 01 R 13/00<br>H 02 H 9/00 |

Der vorliegende Recherchenbericht wurde für alle Patentansprüche erstellt.

| Recherchenort | Abschlußdatum der Recherche | Prüfer |
|---|---|---|
| DEN HAAG | 02-07-1982 | LOMMEL A. |